# EUROPEAN PATENT SPECIFICATION

(11) **EP 1 378 907 B1**
(45) Date of publication and mention of the grant of the patent: **17.09.2008**
(21) Application number: 03253324.2
(22) Date of filing: 28.05.2003
(51) Int. Cl.: G11B 7/007, G11B 20/10, G11B 20/14, G11B 20/18

(54) **Method and apparatus for recording data on optical recording medium**
Verfahren und Gerät zur Datenaufzeichnung auf einem optischen Aufzeichnungsmedium
Méthode et appareil d'enregistrement de données sur un support d'enregistrement optique

(30) Priority: 03.06.2002 KR 2002031068
(43) Date of publication of application: 07.01.2004
(73) Proprietor: SAMSUNG ELECTRONICS CO., LTD., Suwon-City, Kyungki-do (KR)
(72) Inventor: Ahn, Yong-jin, Seocho-gu, Seoul (KR); Park, In-sik, Paldal-gu, Suwon-si, Gyeonggi-do (KR); Lee, Kyung-geun, Bundang-gu, Seongnam-si, Gyeonggi-do (KR); Yoon, Du-seop, Bundang-gu, Seongnam-si, Gyeonggi-do (KR); Hwang, In-oh, Yongin-si, Gyeonggi-do (KR); Ko, Jung-wan, 315-401 Daewoo Apt., Paldal-gu, Suwon-si, Gyeonggi-do (KR); Kim, Seong-sue, Geumho-dong 1-ka, Seongdong-gu, Seoul (KR); Yang, Chang-jin, Yongin-si, Gyeonggi-do (KR); Otsuka, Tatsuhiro, Paldal-gu, Suwon-si, Gyeonggi-do (KR)
(74) Representative: Clark, David James

(56) References cited:
- EP-A2- 0 405 610
- JP-A- 7 105 585
- SIEGEL P H ET AL: "MODULATION AND CODING FOR INFORMATION STORAGE" IEEE COMMUNICATIONS MAGAZINE, IEEE SERVICE CENTER,NEW YORK, NY, US, vol. 29, no. 12, 1 December 1991 (1991-12-01), pages 68-86, XP000287983 ISSN: 0163-6804

## Description

The present invention relates to a method and apparatus for recording data on an optical recording medium, and more particularly, to a method and apparatus for recording channel-modulated digital data on an optical disc by forming a mark or a space thereon.

Data is recorded on an optical disc, which is one of optical recording media, by forming a mark or a space on a target track of the optical disc. In the case of read-only discs such as CD-ROMs and DVD-ROMs, a mark or a space is formed as a pit. In the case of a writable disc such as CD-R/RW or DVD-R/RW/RAM, a recording layer is coated with a phase change material whose properties change into crystalline or amorphous crystalline according to temperature. By using such characteristics of the phase change material, a mark or a space is formed on a writable disc.

Data recording methods using signal detection are divided into a mark edge recording method and a mark position recording method. The mark position recording method uses that the amplitude of a detected radiofrequency (RF) signal changes from a positive/negative value to a negative/positive value, starting from the position of a mark. In contrast, the mark edge recording method uses that the amplitude of a detected RF signal changes from a positive/negative value to a negative/positive value, starting from the both edges of a mark. Thus, the edge of a mark must be precisely recorded on a target track of an optical medium so as to improve the quality of a reproduction signal.

However, in an optical disc covered with a phase change film, the shape of the trailing edge of a mark, which is recorded by such a conventional recording method, depends on the length of a mark or an interval between adjacent marks, i.e., the length of a space. For instance, the size of the trailing edge of a mark may be larger than that of its leading edge, thereby deteriorating the recording/reproducing characteristics of the optical disc. The recording/reproducing characteristics become much worse because heat is accumulated in the edge of a mark when a recording mark is comparatively long.

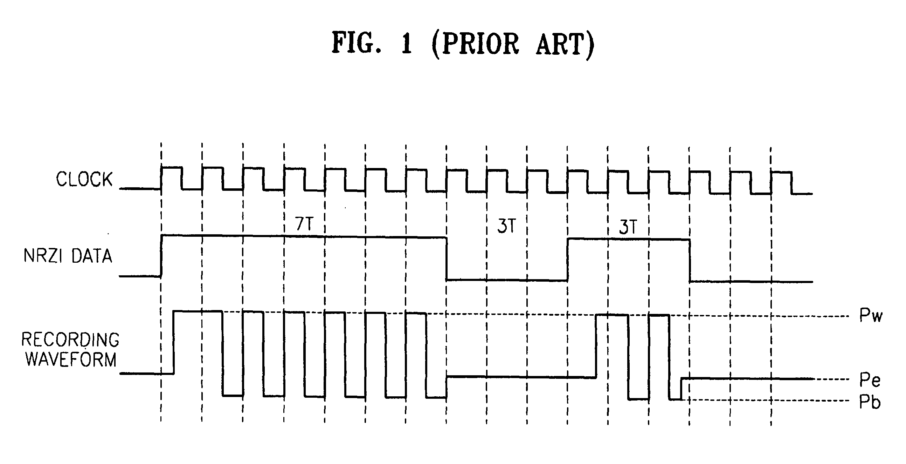

Figure 1 illustrates a conventional recording waveform for recording non-return-to-zero-inverted (NRZI) data on a DVD +RW. Here, *T* denotes a period of a reference clock. In the mark edge recording method, high and low levels of the NRZI data are recorded as a mark and a space, respectively. A recording waveform for recording a mark and a recording waveform for recording a space (for erasing the mark) are called a record pattern and an erase pattern, respectively. A conventional recording waveform includes a record pattern, the record pattern being a multi pulse consisting of a plurality of unit pulses that are maintained at the same power levels for the same time, and includes an erase pattern that is maintained at a predetermined DC level for a predetermined duration.

In detail, the erase pattern included in the conventional recording waveform is maintained at a predetermined DC level for a predetermined time, resulting in continuous heating of an area of an optical disc where the erase pattern is recorded, at a temperature between 0°C and 200°C. If the erase pattern is repeatedly recorded predetermined numbers of time, the quality of the optical disc deteriorates and a mark recorded on the optical disc distorts, thereby remarkably lowering the recording/reproducing characteristics. In particular, the recording/reproducing characteristics deteriorate to a great extent, when a period *T* of a reference clock becomes shorter and thermal interference between pulses of a recording waveform increases as the recording density and linear velocity of an optical disc are increased so as to record much more data. Further, in the case of the conventional record pattern with a multi-pulse, the amount of power supplied to record a mark may decrease to distort the mark when data is recoded on an optical disc at a high speed so as to increase the transmission speed of data, i.e., when the period *T* of the reference clock decreases.

US 2003/0031108, originally published as WO 01/18072, describes a method for recording data on an optical disk including a preheat pulse a recording pulse comprising a short high power part and a long part and a cooling pulse with four different power levels.

According to the present invention there is provided an apparatus and method as set forth in the appended claims. Preferred features of the invention will be apparent from the dependent claims, and the description which follows.

The present invention provides a recording method and apparatus that uses a recording waveform in which the distortion of leading and trailing edges of a mark and the deterioration of an optical disc caused by repetitive recording can be prevented.

The present invention also provides a recording method and apparatus that use a recording waveform having an erase pattern enabling an improvement of the shape of a mark.

The present invention also provide a recording method and apparatus that uses a recording waveform having a record pattern enabling an improvement of the shape of a mark even when recording data at a high speed.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 illustrates a conventional recording waveform;
Figure 2 is a block diagram illustrating the structure of a recording apparatus according to a preferred embodiment of the present invention;
Figure 3 is a detailed block diagram illustrating the structure of the recording apparatus of Figure 2 according to a preferred embodiment of the present invention;
Figures 4 through 12 illustrate recording waveforms generated by a recording waveform generating circuit of Figure 3, according to preferred embodiments of the present invention;
Figures 13 through 16 illustrate four types of erase patterns according to preferred embodiments of the present invention; and
Figure 17 is a flowchart illustrating a recording method according to a preferred embodiment of the present invention.

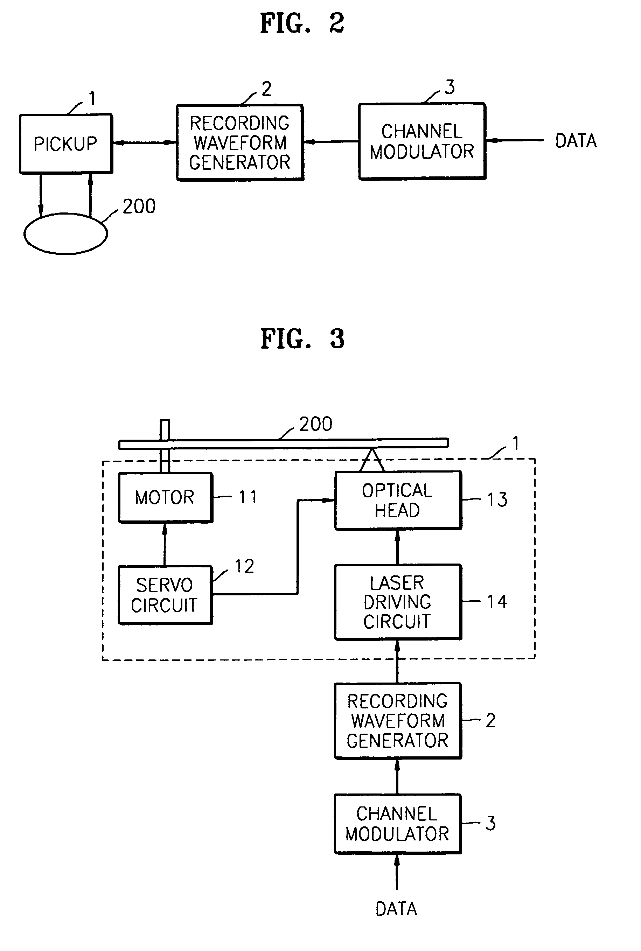

Figure 2 is a block diagram illustrating the structure of a recording apparatus according to a preferred embodiment of the present invention. The recording apparatus records data on an optical recording medium 200 by forming a mark or a space thereon. Referring to Figure 2, the recording apparatus includes a pickup 1, a recording waveform generator 2, and a channel modulator 3.

The channel modulator 3 modulates data input from the outside into a channel bit stream, and the recording waveform generator 2 receives the channel bit stream and generates a recording waveform to record the channel bit stream. The generated recording waveform includes a DC record pattern with a DC pulse and an erase pattern with a multi pulse. The recording waveform will later be described in detail. The pickup 1 forms a mark or a space on the optical recording medium 200 by illuminating light thereon in accordance with the generated recording waveform.

Figure 3 is a block diagram illustrating the structure of the recording apparatus of Figure 2 according to another embodiment of the present invention. Elements that are the same as those of Figure 2 are indicated with the same reference numerals and their descriptions will be omitted here.

The recording apparatus of Figure 3 includes a pickup 1, a recording waveform generator 2, and a channel modulator 3. The pickup 1 includes a motor 11 that rotates an optical disc 200, an optical head 13 that illuminates a laser beam on the optical disc 200 or receives a laser beam reflected from the optical disc 200, a servo circuit 12 that performs servo control on the motor 11 and the optical head 13, and a laser driving circuit 14 that drives laser (not shown) installed in the optical head 13.

The channel modulator 3 creates non-return-to-zero-inverted (NRZI) data by modulating input data into a channel bit stream. The recording waveform generator 2 generates a recording waveform to record the NRZI data and provides the recording waveform to the laser driving circuit 14 included in the pickup 1.

The laser driving circuit 14 forms a mark or a space on the optical disc 200 by controlling the laser using the received recording waveform.

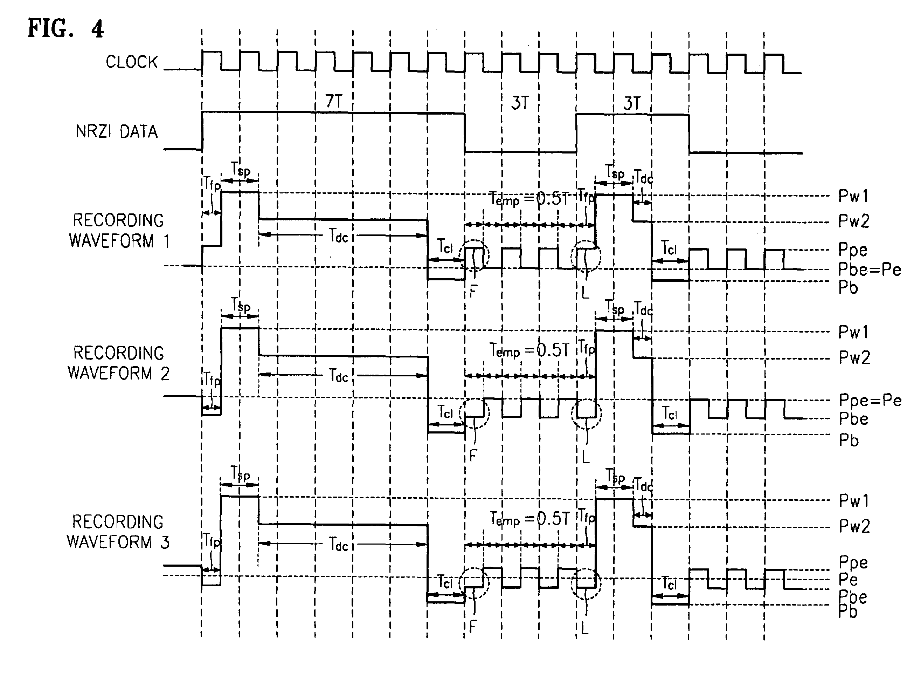

Figure 4 shows recording waveforms 1 through 3 for recording NRZI data, according to a preferred embodiment of the present invention, these recording waveforms being generated by the recording waveform generator 2 of Figure 2 or 3.

The NRZI data varies according to the type of a modulating method adopted by the channel modulator 3. For instance, the minimum and maximum lengths of a mark are 3T and 11T when input data is modulated using run length limited (RLL) (2, 10) encoding which includes eight-to-fourteen modulation (EFM), eight-to-fourteen modulation plus (EFM+), D(8-15), and dual modulation. Here, D(8-15) is a modulation technique introduced in a report titled *"*Optical Disc Recording System of 25 GB Capacity" in Optical Data Storage (OSD) which was presented by Matsushita Electrics Co., Ltd. in 2001. The dual modulation is disclosed in Korean Patent Application No. 99-42032 entitled "Method of Arranging Improved RLL Code Capable of Suppressing DC, Modulating and Demodulating Method, and Modulator", filed 30 September 1999 and published 25 November 2000 by the same applicant of the present application. When data is recorded using RLL (1,7) encoding, the minimum and maximum lengths of a mark are 2T and 8T.

The recording waveforms 1, 2, and 3 are examples of a recording waveform that includes a DC record pattern, and an erase pattern with a multi pulse.

In each DC record-pattern, a first pulse *T_{fp}* with different power levels, a second pulse *Tₛₚ*, a DC pulse *T_{dc}*, and a cooling pulse *T_{cl}* are sequentially generated. Here, *T_{fp}, Tₛₚ*, *T_{dc},* and *T_{cl}* denote the pulse duration of the first, second, DC, and cooling pulses, respectively. During recording of a mark of 7T, the DC pulse is maintained for more than 4T. The power level of the DC pulse *T_{dc}* is higher than that of the first pulse *T_{fp}* but is lower than that of the second pulse *Tₛₚ*. The power level of the cooling pulse *T_{cl}* is lower than that of the first pulse *T_{fp}.* The power level of the first pulse *T_{fp}* of the recording waveform 1 is the same as high power levels of a multi pulse, which will be later described, and the power levels of the first pulses *T_{fp}* of the recording waveforms 2 and 3 are the same as low power levels of the multi pulse.

Each erase pattern consists of a multi pulse. In Figure 4, *Tₑₘₚ* denotes the width of each erase multi pulse that is comprised of the erase pattern. In this embodiment, *Tₑₘₚ* is set to 0.5T.

The power levels of the first and last erase pulses *F* and *L*, which constitute the multi pulse of the recording waveform 1, are the same as high power levels of the multi pulse, whereas the power levels of the first and last erase pulses *F* and *L*, which constitute the multi pulses of the recording waveforms 2 and 3, are the same as low power levels of the multi pulse. Each last pulse L is also the first pulse of each of the recording waveforms 1 through 3 for recording a mark having 3T that follows the multi pulse. The multi pulse of the erase pattern of the recording waveform 2 has different power levels from that of the erase pattern of the recording waveform 3.

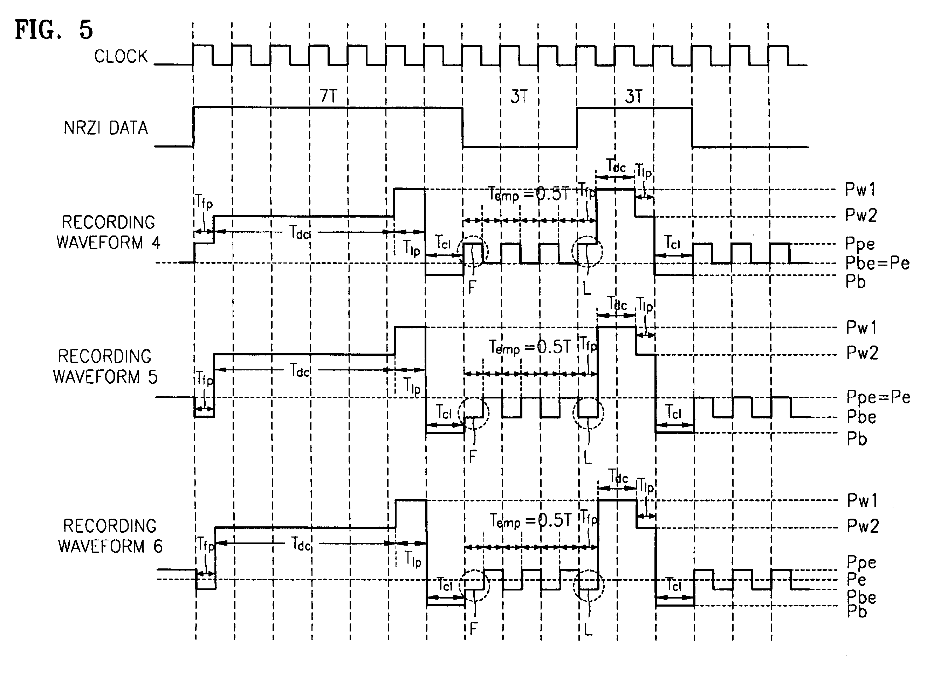

Figure 5 illustrates recording waveforms 4 through 6 for recording NRZI data, according to another embodiments of the present invention, these recording waveforms being generated by the recording waveform generator 2. The recording waveforms 4, 5, and 6 show different DC record patterns according to the present invention. In each DC record pattern, a first pulse *T_{fp}* with different power levels, a DC pulse *T_{dc}*, a last pulse *Tₗₚ*, and a cooling pulse *T_{cl}* are sequentially generated. Here, *T_{fp,} T_{dc}, Tₗₚ,* and *T_{cl}* denote the pulse duration of the first pulse, the DC pulse, the last pulse, and the cooling pulse, respectively.

During recording of a mark of 7T, the DC pulse *T_{dc}* is maintained for more than 4T. Also, the power level of the DC pulse *T_{dc}* is higher than that of the first pulse *T_{fp}* but is lower than that of the last pulse *Tₗₚ*, and the power level of the cooling pulse *T_{cl}* is lower than that of the first pulse *T_{fp}*. During recording of a mark of 3T, the power level of the last pulse *Tₗₚ* of a multi pulse is higher than that of the first pulse *T_{fp}*but is lower than that of the DC pulse *T_{dc}*. The power level of the first pulse *T_{fp}* of the recording waveform 4 is the same as high power levels of the multi pulse, which will be later described, whereas the power levels of the first pulses *T_{fp}* of the recording waveforms 5 and 6 are the same as low power levels of the multi pulse.

Each erase pattern consists of a multi pulse. In Figure 5, *Tₑₘₚ* denotes the width of each erase multi pulse which constitutes the erase pattern. In this embodiment, *Tₑₘₚ* is set to 0.5T.

The first and last erase pulses *F* and *L*, which constitute the multi pulse of the recording waveform 4, are the same as the high power levels of the multi pulse, whereas the first and last erase pulses *F* and *L*, which constitute the multi pulses of the recording waveforms 5 and 6, are the same as at the low power levels of the multi pulses. The last pulse *L* is also the first pulse of each of the recording waveforms 4 through 6 for recording a mark of 3T that follows the multi pulse. The multi pulse of the erase pattern of the recording waveform 5 has different power levels from that of the erase pattern of the recording waveform 6.

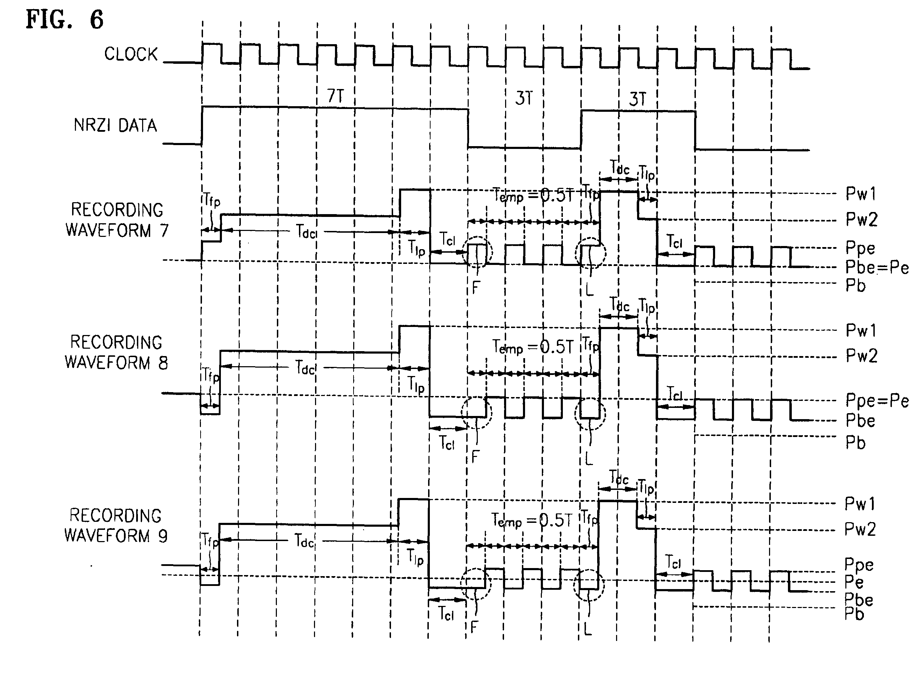

Figure 6 show recording waveforms 7 through 9 for recording NRZI data, according to still another embodiment of the present invention, these recording waveforms being generated by the recording waveform generator 2. Referring to Figure 6, the recording waveforms 7 through 9 illustrate different DC record patterns according to the present invention. In each DC record pattern, a first pulse *T_{fp}* with different power levels, a DC pulse *T_{dc},* a last pulse *Tₗₚ,* and a cooling pulse *T_{cl}*, are sequentially generated. Here, *T_{fp}, T_{dc}, Tₗₚ,* and *T_{cl}* denote the pulse duration of the first pulse, the DC pulse, the last pulse, and the cooling pulse, respectively.

During recording a mark of 7T, the DC pulse *T_{dc}* is maintained for more than 4T. Also, the power level of the DC pulse *T_{dc}* is higher than that of the first pulse *T_{fp}* but is lower than that of the last pulse *Tₗₚ,* Also, the power level of the cooling pulse *T_{cl}* is lower than that of the first pulse *T_{fp}.* During recording of a mark of 3T, the power level of the last pulse *Tₗₚ* is higher than that of the first pulse *T_{fp}* but is lower than that of the DC pulse *T_{dc}*. The power level of the first pulse *T_{fp}* of the recording waveform 7 is the same as high power levels of a multi pulse, which will be later described, whereas the power levels of the first pulses *T_{fp}* of the recording waveforms 8 and 9 are the same as low power levels of the multi pulse.

Each erase pattern consists of a multi pulse. Here, *Tₑₘₚ* denotes the width of each erase multi pulse which constitutes the erase pattern. In this embodiment, the *Tₑₘₚ* is set to 0.5T.

The first and last erase pulses *F* and *L*, which constitute the multi pulse of the recording waveform 7, are the same as high power levels, whereas the first and last erase pulses *F* and *L,* which constitute the multi pulses of the recording waveforms 8 and 9, are the same as low power levels. The last pulse *L* is also the first pulse of each of the recording waveforms 7 through 9 for recording a mark of 3T that follows the multi pulse. The multi pulse of the erase pattern of the recording waveform 8 has different power levels from that of the erase pattern of the recording waveform 9.

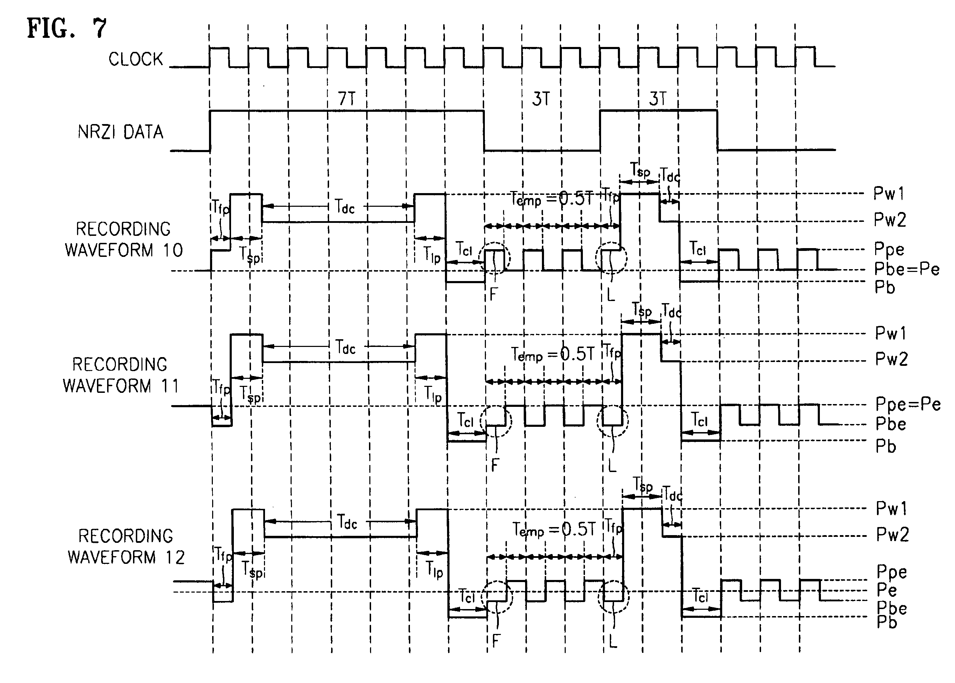

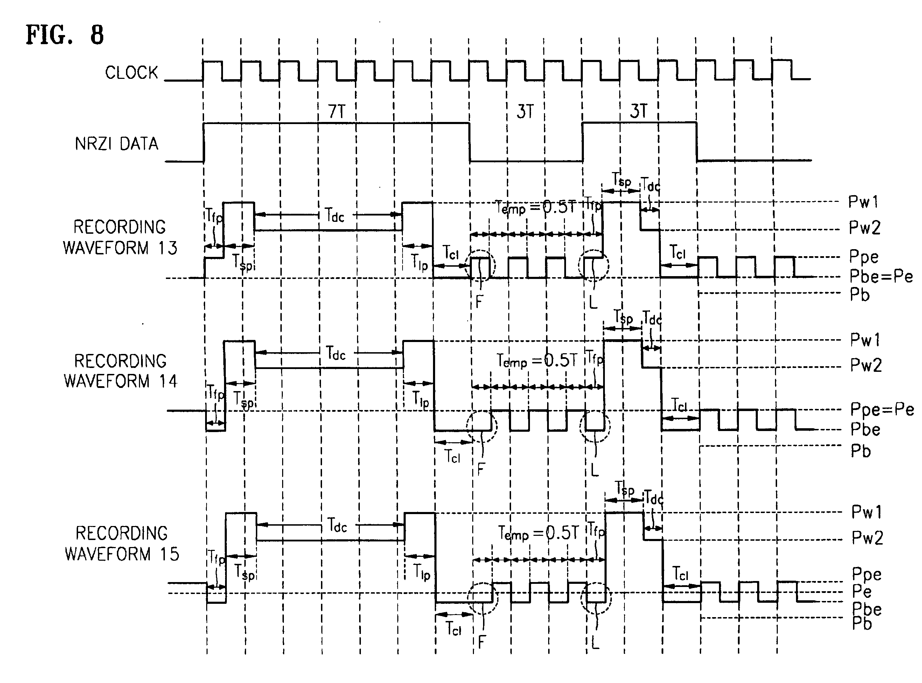

Figures 7 and 8 illustrate recording waveforms 10 through 12 and 13 through 15 for recording NRZI data, according to still another embodiments of the present invention, these DC recording waveforms being generated by the recording waveform generator 2. The recording waveforms 10 through 15 illustrate different DC record patterns according to the present invention.

In each DC record patterns, a first pulses *T_{fp}* with different power levels, a second pulse *Tₛₚ,* a DC pulse *T_{dc},* a last pulse *Tₗₚ,* and a cooling pulses *T_{cl}* are sequentially generated. Here, *T_{fp}*, *Tₛₚ*, *T_{dc}, Tₗₚ,* and *T_{cl}* denote the pulse duration of the first pulse, the second pulse, the DC pulse, the last pulse, and the cooling pulse, respectively. The power levels of the second and last pulses *T_{fp}* and *Tₗₚ* are the same but those of the other pulses are different from one another. The last pulse *Tₗₚ* is not included in each of the DC record patterns for recording a mark of 3T.

During recording of a mark of 7T, the DC pulse *T_{dc}* is maintained for more than 4T. Also, the power level of the DC pulse *T_{dc}* is higher than that of the first pulse *T_{fp}* but is lower than that of the last pulse *Tₗₚ.* Also, the power level of the cooling pulse *T_{cl} is* lower than that of the first pulse *T_{fp}.* During recording of a mark of 3T, the power level of the DC pulse *T_{dc}* is higher than that of the first pulse *T_{fp}* but is lower than that of the second pulse *Tₛₚ*. The power levels of the first pulses *T_{fp}* of the recording waveforms 10 and 13 are the same as high power levels of a multi pulse, which will be later described, whereas the power levels of the cooling pulses *T_{cl}* of the recording waveforms 11, 12, 14, and 15 are the same as low power levels of the multi pulse.

Meanwhile, each erase pattern consists of a multi pulse. Here, *Tₑₘₚ* denotes the width of each erase multi pulses which constitute the erase pattern. In this embodiment, *Tₑₘₚ* is set to 0.5T.

The first and last erase pulses *F* and *L*, which constitute the multi pulse of the recording waveform 16, are the same as high power levels of the multi pulse, whereas the first and last erase pulses *F* and *L,* which constitute the multi pulses of the recording waveforms 17 and 18, are the same as low power levels of the multi pulse. The last pulse *L* is also the first pulse of each of the recording waveforms 10 through 15 for recording a mark of 3T that follows the multi pulse.

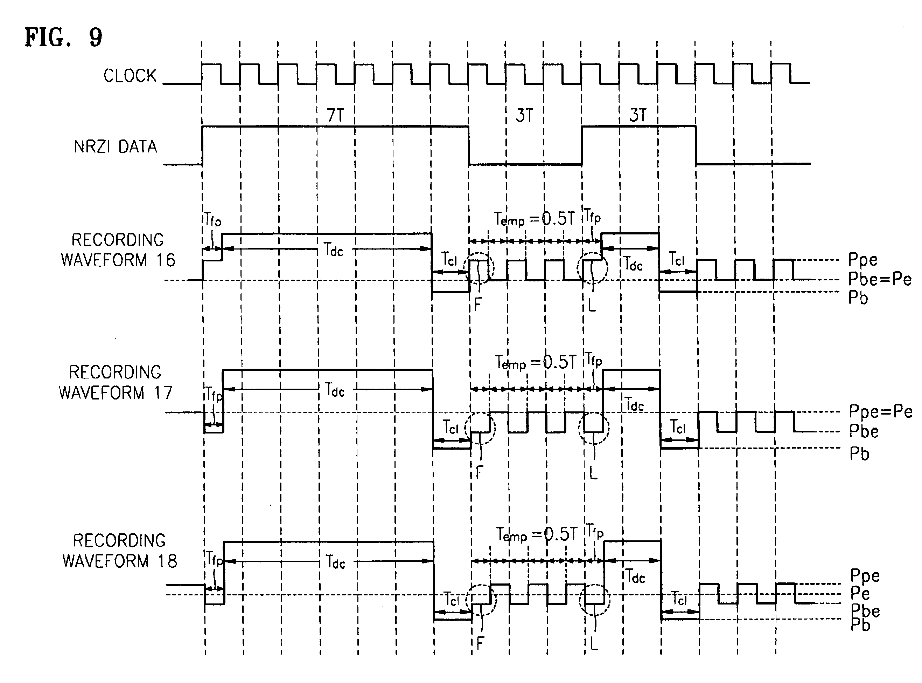

Figure 9 illustrate recording waveforms 16 through 18 for recording NRZI data, according to still another embodiments of the present invention, these recording waveforms being generated by the recording waveform generator 2. The recording waveforms 16 through 18 illustrate different DC record patterns according to the present invention.

In each DC record pattern, a first pulse *T_{fp}* with different power levels, a second pulse *Tₛₚ*, a DC pulse *Tₛₚ,* a last pulse *Tₗₚ,* and a cooling pulse *T_{cl}* are sequentially generated. Here, *T_{fp}, Tₛₚ*, *T_{dc}, Tₗₚ,* and *T_{cl}* denote the pulse duration of the first pulse, the second pulse, the DC pulse, the last pulse, and the cooling pulse, respectively. Here, the power level of the DC pulse *T_{dc}* is higher than that of the first pulse *T_{fp}* and the power level of the cooling pulse *T_{cl}* is lower than that of the first pulse *T_{fp}*.

The DC pulse *T_{dc}* is maintained for more than 5T during recording of a mark of 7T and maintained for more than a mark of 1T during recording of a mark of 3T. The power level of the first pulse *T_{fp}* of the recording waveform 16 is the same as high power levels of a multi pulse, which will be later described, whereas the power levels of the first pulses *T_{fp}* of the recording waveforms 17 and 18 are the same as low power levels of the multi pulse.

Each erase pattern consists of a multi pulse. Here, *Tₑₘₚ* denotes the width of each erase multi pulse which constitutes the erase pattern. In this embodiment, the *Tₑₘₚ* is set to 0.5T.

The first and last erase pulses *F* and *L*, which constitute the multi pulse of the recording waveform 16, are the same as the high power levels of the multi pulse, whereas the first and last erase pulses *F* and *L,* which constitute the multi pulses of the recording waveforms 17 and 18, are the same as the low power levels of the multi pulse. The last pulse *L* is also the first pulse of each of the recording waveforms 16 through 18 for recording a mark of 3T that follows the multi pulse.

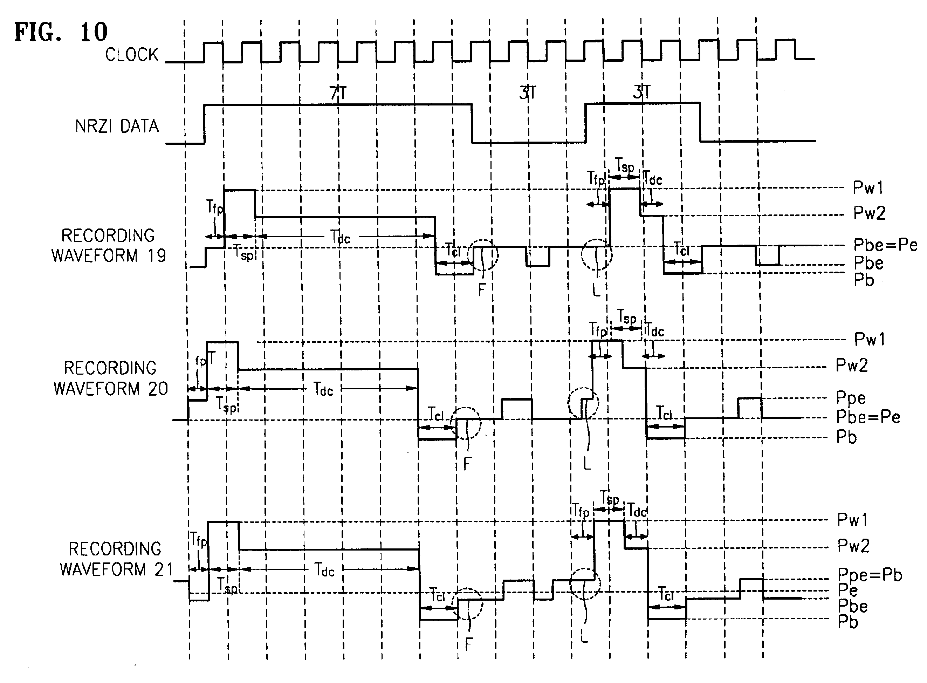

Figure 10 illustrate recording waveforms 19 through 21 for recording NRZI data, according to still another embodiment of the present invention, these recording waveforms being generated by the recording waveform generator 2. The recording waveforms 16 through 18 illustrate different erase patterns according to the present invention.

In each DC record pattern, a first pulse *T_{fp}* with different power levels, a second pulse *Tₛₚ*, a DC pulse *T_{dc},* and a cooling pulse *T_{cl}* are sequentially generated. Here, *T_{fp}, Tₛₚ*, *T_{dc},* and *T_{cl}* denote the pulse duration of the first pulse, the second pulse, the DC pulse, and the cooling pulse, respectively. The DC pulse *T_{dc}* is maintained for more than 4T during recording of a mark of 7T. The power level of the DC pulse *T_{dc}* of each recording waveform is higher than the power level of the first pulse *T_{fp}* but lower than that of the second pulse *Tₛₚ*. Also, the power level of the cooling pulse *T_{cl}* is lower than that of the first pulse *T_{fp}*. However, the power level of the first pulse *T_{fp}* of the recording waveform 19 is the same as high power levels of a multi pulse, which will be later described, and the power levels of the first pulse *T_{fp}* of the recording waveforms 20 and 21 are the same as low power levels of the multi pulse

Each erase pattern consists of a modified multi pulse. The modified multi pulse is obtained by making the pulse durations of respective unit pulses be different from one another. The power levels of the first and last erase pulses *F* and *L*, which constitute the multi pulse of the recording waveform 19, are the same as high power levels of the multi pulse. The power levels of the first and last pulses *F* and *L,* which constitute the multi pulses of the recording waveforms 20 and 21, are the same as low power levels of the multi pulse. The last pulse *L* is also the first pulse of each of the recording waveforms 19 through 21 for recording a mark of 3T that follows the multi pulse.

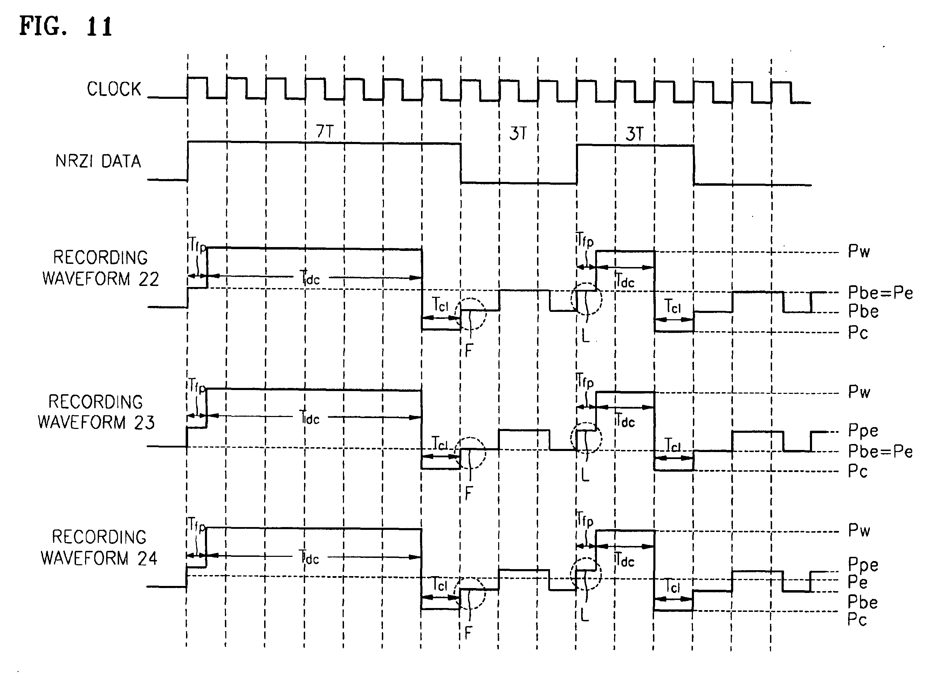

Figure 11 shows recording waveforms 22 through 24 generated by the recording waveform generator 2 according to still another embodiment of the present invention. Referring to Figure 11, the recording waveforms 22 through 24 illustrate different erase patterns according to the present invention.

In each DC record pattern, a first pulse *T_{fp}* with different power levels, a DC pulse *T_{dc},* and a cooling pulse *T_{cl}* are sequentially generated. Here, *T_{fp}*, *T_{dc,}* and *T_{cl}* denote the pulse duration of the first pulse, the DC pulse, and the cooling pulse, respectively. The DC pulse *T_{dc}* is maintained for more than 5T when recording a mark of 7T and maintained for more than 1T when recording a mark of 3T. The power level of the DC pulse *T_{dc}* is higher than that of the first pulse *T_{fp}* and the power level of the cooling pulse *T_{cl}* is lower than that of the first pulse *T_{fp}*. Also, the power levels of the first pulses *T_{fp}* of the recording waveforms 22 through 24 are the same as the high power levels of modified multi pulses which will be later described in detail.

Each erase pattern consists of a modified multi pulse. The modified multi pulse is obtained by make the pulse duration of unit pulses be different from one another. The first and last erase pulses F and L of the modified multi pulse of each of the recording waveforms 22 through 24 are at low and high power levels, respectively. Each last erase pulse *L* is also the first pulse *T_{fp}* of the record pattern for recording a mark of 3T which follows the multi pulse.

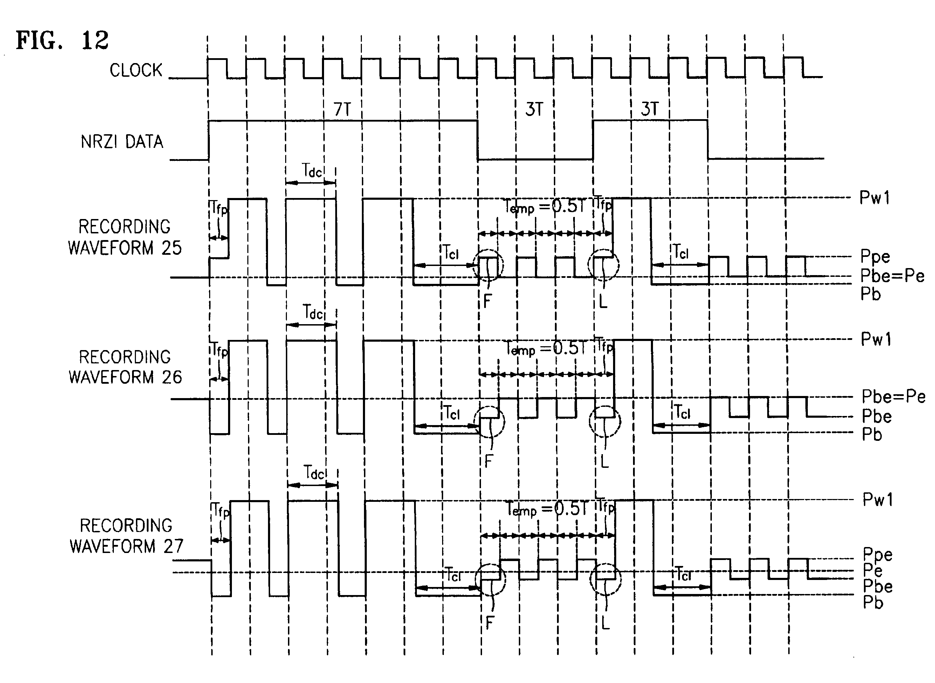

Figure 12 shows recording waveforms 25 through 27 generated by the recording waveform generator 2 according to still another embodiment of the present invention. Referring to Figure 12, the recording waveforms 25 through 27 illustrate different DC record patterns according to the present invention.

In the case of record patterns, a first pulse*T_{fp}* a modified DC pulse *T_{dc},* and a cooling pulse *T_{cl}* are sequentially generated during recording of a mark of 7T. The power level of the modified DC pulse *T_{dc}* is maintained at a DC level for more than 1T and then is lowered to the power level of the cooling pulse *T_{cl}* for less than 1 T. Such a change in the power level of the modified DC pulse *T_{dc}* is repeated predetermined numbers of time. When recording a mark of 3T, a first pulse *T_{fp}* a DC pulse T_{dc}, and a cooling pulse *T_{cl}* are sequentially generated. Here, *T_{fp}, T_{dc},* and *T_{cl}* denote the pulse duration of the first pulse, the modified DC pulse, and the cooling pulse, respectively.

Each erase pattern consists of a modified multi pulse. In Figure 12, *Tₑₘₚ* denotes the width of an erase multi pulse that constitutes the erase pattern. In this embodiment, *Tₑₘₚ* is set to 0.5T.

The first and last erase pulses *F* and *L* of the multi pulse of the recording waveform 25 are at high power levels, and the first and last erase pulses *F* and *L* of the multi pulses of the recording waveforms 22 through 24 are at low power levels. Each last erase pulse *L* is also the first pulse *T_{fp}* of the record pattern for recording a mark of 3T that follows the multi pulse.

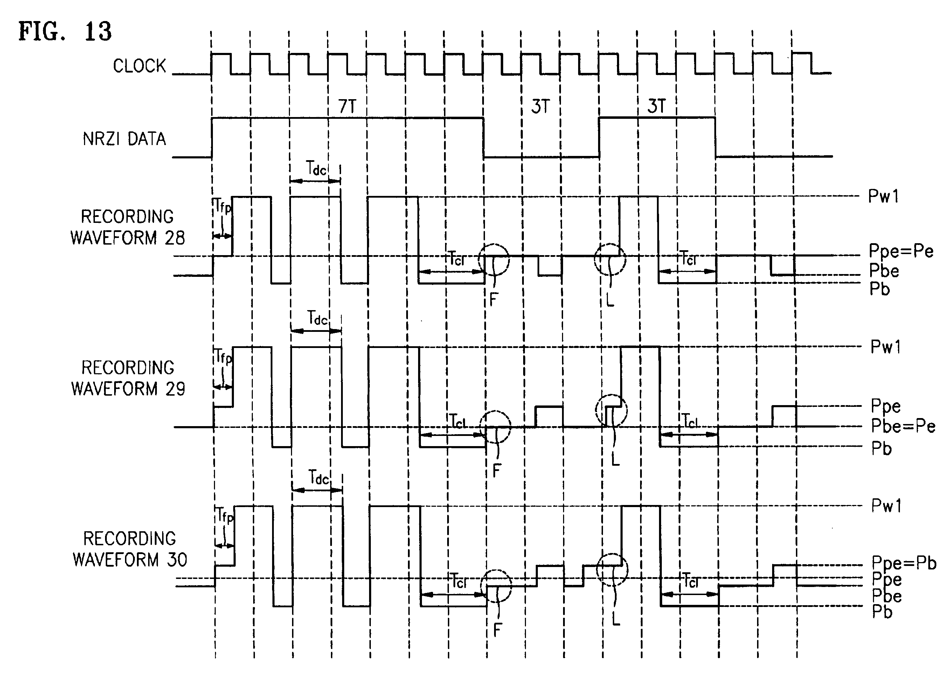

Figure 13 illustrates recording waveforms 28 through 30 generated by the recording waveform generator 2, according to still another embodiment of the present invention. The recording waveforms 28 through 30 show different DC record patterns according to the present invention.

In a record pattern for recording a mark of 7T, a first pulse *T_{fp}* a modified DC pulse *T_{dc},* and a cooling pulse *T_{cl}* are sequentially generated. The power level of the modified DC pulse *T_{dc}* is maintained at a DC level for more than 1 T and reduced to the power level of the cooling pulse *T_{cl}* for less than 1T. Such a change in the power level of the modified DC pulse *T_{dc}* is repeated predetermined numbers of time. In a record pattern for recording the next mark of 3T, a first pulse *T_{fp},* a DC pulse *T_{dc,}* and a cooling pulse *T_{cl}* are sequentially generated. Here, *T_{fp}, T_{dc,}* and *T_{cl}* denote the pulse duration of the first, DC, and cooling pulses, respectively.

Each erase pattern consists of a modified multi pulse. The modified multi pulse is obtained by make the pulse duration of unit pulses be different from one another. The power levels of the first and last erase pulses *F* and *L,* which constitute the modified multi pulse of the recording waveform 28, are at high power levels. In contrast, the power levels of the first and last erase pulses *F* and *L*, constitute the modified multi pulses of the recording waveforms 29 and 30, are at low power levels and high power levels, respectively. Each last erase pulse *L* is also the first pulse *T_{fp}* of the record pattern for recording the mark of 3T that follows the modified multi pulse.

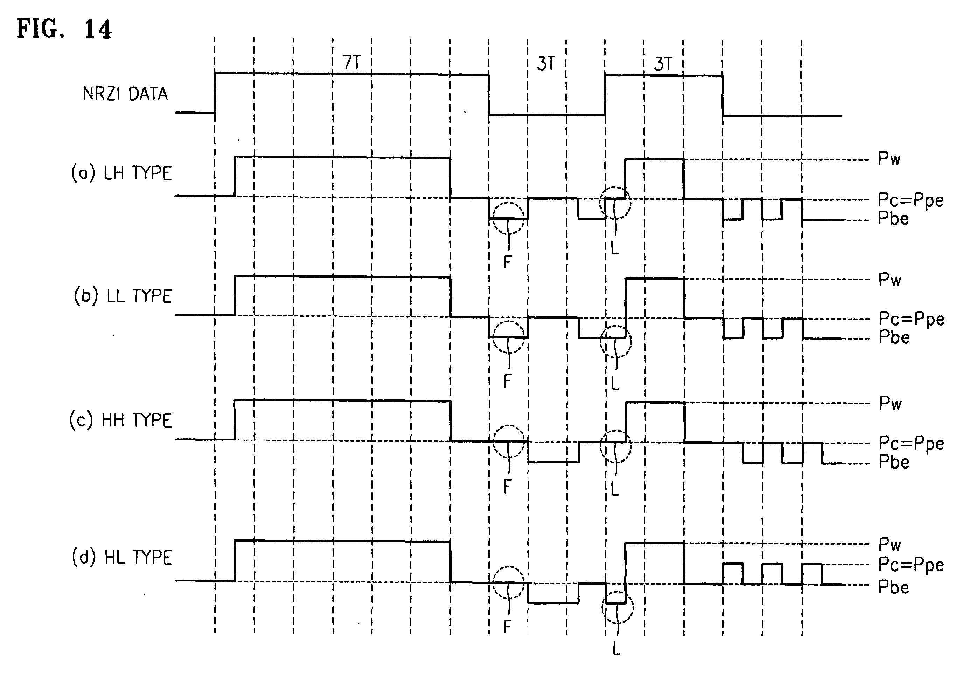

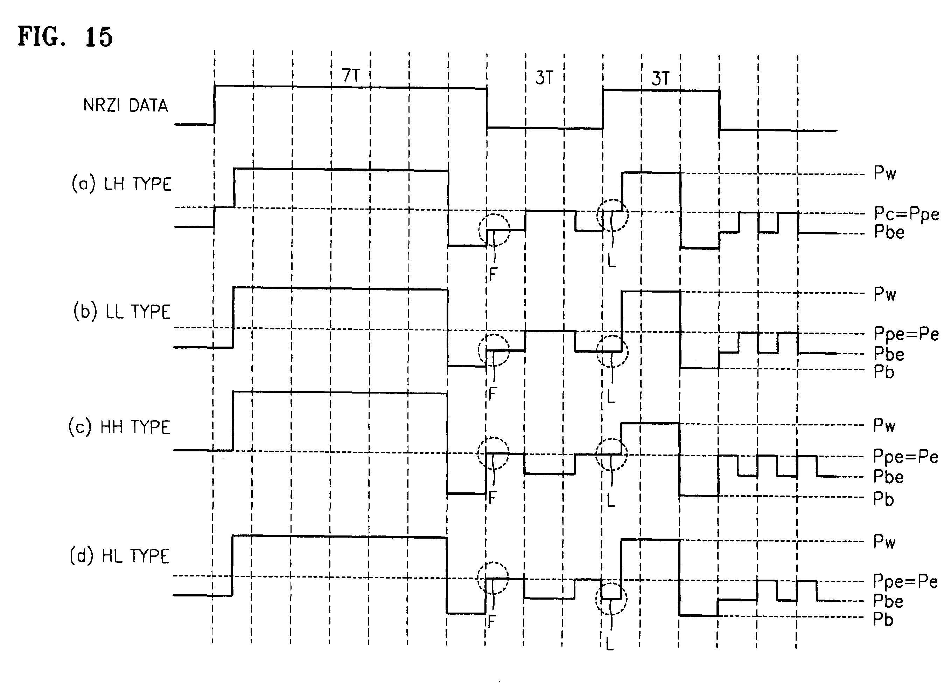

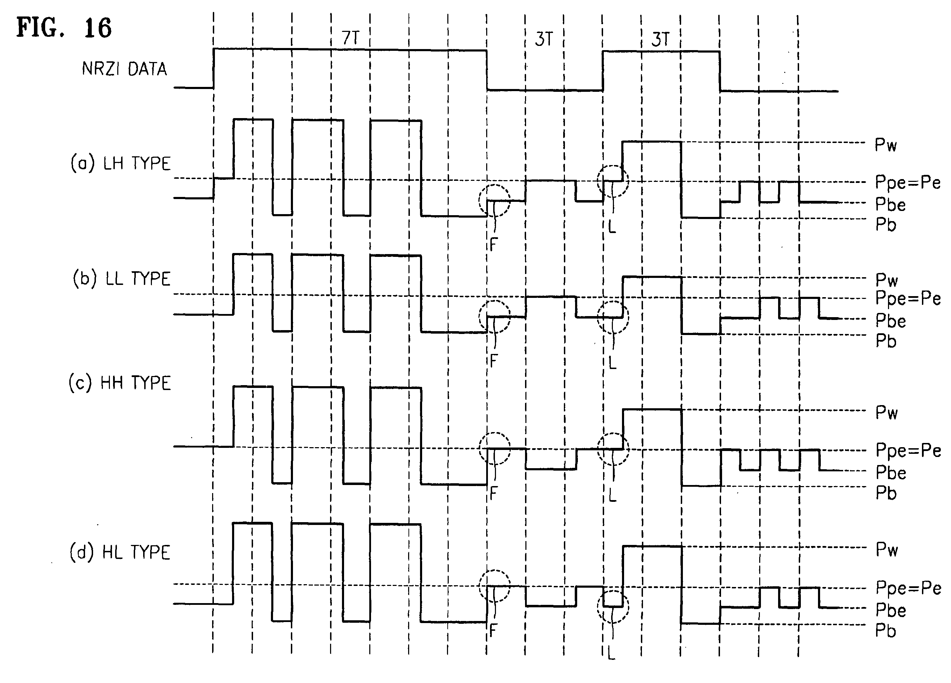

Figures 14 through 16 illustrate recording waveforms showing four types of erase patterns according to a preferred embodiment of the present invention. The characteristic portions of the respective erase patterns are marked with circles in order to tell them from one another.

Referring to Figures 14 through 16, erase patterns consist of modified multi pulses, classified into four types: (a) LH type; (b) LL type; (c) HH type; and (d) HL type. In detail, (a) shows an erase pattern of an LH type, the first erase pulse F of which is at a low power level and the last erase pulse L of which is at a high power level. (b) shows an erase pattern of an LL type, the first and last erase pulses *F* and *L* of which are at low power levels. (c) shows an erase pattern of an HH type, the first and last erase pulses F and L of which are at high power levels. (d) shows an erase pattern of an HL type, the first erase pulse *F* of which is at a high power level and the last erase pulse *L* of which is at a low power level.

In this disclosure, the duration of the high and low power levels of a multi pulse of an erase pattern according to the present invention is set to 0.5T, that is, a ratio of the duration of the high power level to that of the low power level is 1:1. However, there is no limit to the ratio, for example, the ratio may be m:n (m and n are integers).

As described above, a recording waveform according to the present invention includes an erase pattern consisting of a multi pulse, thereby reducing the distortion of an end of a mark and increasing the reproducing characteristics. The recording waveform further includes a DC record pattern with a DC pulse, which prevents a reduction in power supplied when recording data a high speed and improves the shape of a mark by more easily controlling recording operations.

Meanwhile, information (or type information) regarding four types of erase patterns may be recorded in a lead-in area of a writable disc or contained as header information in a wobble signal. Therefore, when recording data on a writable disc, a recording apparatus reads type information from a lead-in area or a wobble signal and forms a mark or a space on the disc by generating a recording waveform based on the type information.

The four types of the erase patterns may be used as codes indicating a reading speed factor of a disc drive or the type of a mark. For instance, an LH-type erase pattern may indicate that information recorded on a disc using the erase pattern is preferably reproduced at a 20X speed factor.

Hereinafter, a method of recording channel-modulated digital data on an optical disc by forming marks and spaces thereon according to a preferred embodiment of the present invention will be described based on the above configuration.

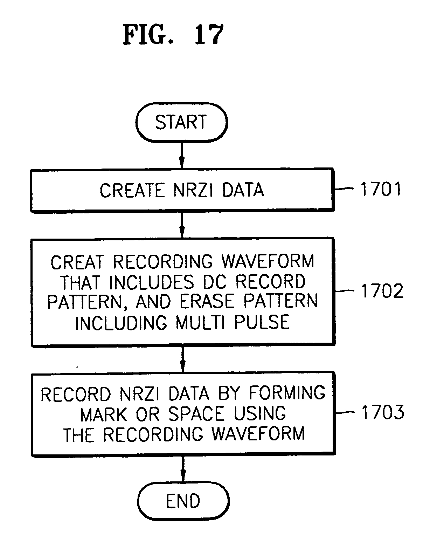

Figure 17 is a flowchart illustrating a recording method according to a preferred embodiment of the present invention. Referring to Figure 17, a recording apparatus receives and modulates external data to produce NRZI data in action 1701. In action 1702, the recording apparatus creates a recording waveform that includes a DC record pattern, and an erase pattern with a multi pulse. In action 1703, the recording apparatus forms a mark or a space on an optical disc using the recording waveform.

In this disclosure, the aforementioned recording waveforms are described with respect to marks of 7T and 3T. However, those skilled in the art could have easily derived a record pattern and an erase pattern for marks or spaces of 2T, 4T, 5T, or 6T, from the teachings of the present invention.

As described above, the present invention provides a recording apparatus and method for recording a recording waveform that prevents the distortion of a mark due to thermal interference or accumulation between adjacent marks and improves the shape of a mark. According to the present invention, the shape of a mark is hardly distorted even when recording data at a high speed, thereby increasing reading/reproducing characteristics.

Although a few preferred embodiments have been shown and described, it will be appreciated by those skilled in the art that various changes and modifications might be made without departing from the scope of the invention, as defined in the appended claims.

## Claims

1. A method of recording data on an optical recording medium, comprising:
(a) producing channel-modulated digital data as a signal varying between a first level (a mark) and a second level (a space) according to the digital data and a channel modulation scheme wherein the digital data input to the channel modulator has a clock period T;
(b) producing in response to the digital data input to the channel modulator a recording waveform which includes a DC record-pattern corresponding to a mark of run length of 7T, and an erase pattern including a multi pulse corresponding to a space; and
**characterised in that** the DC record-pattern comprises, in sequence, a first record pulse with a first power level, a second record pulse, with a second power level, a DC pulse that is maintained at a predetermined power level, and a cooling pulse wherein the power level of the DC pulse is maintained for more than four clock periods when recording a mark having seven Twherein the power level of the DC pulse is higher than that of the first record pulse and lower than that of the second record pulse, and the power level of the cooling pulse is lower than that of the first record pulse and wherein the power levels of first and last erase pulses of the erase pattern are the same as a first power level of the DC record-pattern.

2. The method of claim 1, wherein the DC pulse is of higher power level than the erase pattern.

3. The method of claim 1 or 2, wherein during steps (a) through (c), RLL (2,10) encoding is used.

4. The method of claim 1 or 2, wherein during steps (a) through (c), RLL (1,7) encoding is used.

5. The method of any of claims 1 to 4, wherein the multi pulse of the erase pattern is made up of pulses of a high power level and a low power level, switched at a period of a half of a clock period of the channel-modulated digital data.

6. The method of claim 1, wherein the first and second record pulses and the cooling pulse are maintained for a half of a clock period, a clock period, and a clock period, respectively, when recording a mark having seven clock periods.

7. The method of claim 6, wherein the cooling pulse ends at an edge of corresponding NRZI data.

8. An apparatus for recording data on an optical recording medium, comprising:
a recording waveform generator (2) which generates a recording waveform that includes a DC record-pattern, and an erase pattern including a multi pulse according to steps (a) and (b) and of the method of any one of claims 1-7; and
a pickup (1) which forms a mark or a space by illuminating a beam on the optical recording medium in accordance with the recording waveform.

9. The apparatus of claim 8, wherein the DC record-pattern has different power levels that are higher than that of the erase pattern.

10. The apparatus of claim 8 or 9, further comprising a channel modulator (3) which receives external data, modules the channel of the external data to produce NRZI data, and outputs the NRZI data to the recording waveform generator.

## Patentansprüche

1. Verfahren zur Datenaufzeichnung auf einem optischen Aufzeichnungsmedium, umfassend:
(a) Produzieren kanalmodulierter digitaler Daten als ein Signal, das zwischen einem ersten Niveau (einem Mark) und einem zweiten Niveau (einem Space) variiert, entsprechend den digitalen Daten und einem Kanalmodulationsschema, wobei die digitale Dateneingabe in den Kanalmodulator eine Taktperiode T aufweist;
(b) Produzieren, in Antwort auf die digitale Dateneingabe in den Kanalmodulator, einer entsprechenden Wellenform, die ein Gleichstrom-Aufzeichnungsmuster entsprechend einem Mark der Lauflänge von 7T umfasst, und eines Löschmusters, das einen Multipuls entsprechend einem Space umfasst; und
**dadurch gekennzeichnet, dass** das Gleichstrom-Aufzeichnungsmuster in Folge einen ersten Aufzeichnungspuls mit einem ersten Leistungspegel, einen zweiten Aufzeichnungspuls mit einem zweiten Aufzeichnungspegel, einen Gleichstrompuls, der auf einem vorgegebenen Leistungspegel aufrechterhalten wird, und einen Kühlpuls umfasst,
wobei der Leistungspegel des Gleichstrompulses mehr als vier Perioden lang aufrechterhalten wird, wenn ein Mark mit sieben T aufgezeichnet wird,
wobei der Leistungspegel des Gleichstrompulses höher als der des ersten Aufzeichnungspulses und niedriger als der des zweiten Aufzeichnungspulses ist, und der Leistungspegel des Kühlpulses niedriger als der des ersten Aufzeichnungspulses ist, und
wobei die Leistungspegel des ersten und letzten Löschpulses des Löschmusters die gleichen wie ein erster Leistungspegel des Gleichstrom-Aufzeichnungsmusters sind.

2. Verfahren nach Anspruch 1, wobei der Gleichstrompuls einen höheren Leistungspegel als das Löschmuster hat.

3. Verfahren nach Anspruch 1 oder 2. wobei während der Schritte (a) bis (c) RLL-Kodierung (2, 10) verwendet wird.

4. Verfahren nach Anspruch 1 oder 2. wobei während der Schritte (a) bis (c) RLL-Kodierung (1, 7) verwendet wird.

5. Verfahren nach einem der Schritte 1 bis 4, wobei der Multipuls des Löschmusters aus Pulsen mit einem höheren Leistungspegel und einem niedrigeren Leistungspegel besteht, die bei einer Periode einer Hälfte einer Taktperiode der kanalmodulierten digitalen Daten geschalten werden.

6. Verfahren nach Anspruch 1, wobei der erste und zweite Aufzeichnungspuls und der Kühlpuls eine halbe Taktperiode, eine Taktperiode respektive eine Taktperiode lang aufrechterhalten werden, wenn ein Mark mit sieben Taktperioden aufgezeichnet wird.

7. Verfahren nach Anspruch 6, wobei der Kühlpuls an einer Kante entsprechender NRZI-Daten endet.

8. Vorrichtung zur Datenaufzeichnung auf einem optischen Aufzeichnungsmedium, umfassend:
einen Aufzeichnungswellenformgenerator (2), der eine Aufzeichnungswellenform erzeugt, die ein Gleichstrom-Aufzeichnungsmuster einschließt, und ein Löschmuster, das einen Multipuls gemäß der Schritte (a) und (b) umfasst und nach dem Verfahren nach einem der Ansprüche 1-7; und
einen Aufnehmer (1), der ein Mark durch Beleuchten des optischen Aufzeichnungsmediums mit einem Strahl bildet, entsprechend der Aufzeichnungswellenform.

9. Vorrichtung nach Anspruch 8, wobei das Gleichstrom-Aufzeichnungsmuster unterschiedliche Leistungspegel hat, die höher als der des Löschmusters sind.

10. Vorrichtung nach Anspruch 8 oder 9, weiterhin umfassend einen Kanalmodulator (3), der externe Daten empfängt, den Kanal der externen Daten moduliert, um NRZI-Daten zu produzieren, und die NRZI-Daten an den Aufzeichnungswellenformgenerator ausgibt.

## Revendications

1. Procédé d'enregistrement de données sur un support d'enregistrement optique, comprenant :
(a) la production de données numériques modulées en canal sous forme d'un signal variant entre un premier niveau (une marque) et un second niveau (un espace) selon les données numériques et un schéma de modulation de canal, dans lequel les données numériques délivrées en entrée au modulateur de canal ont une période d'horloge T ;
(b) la production, en réponse aux données numériques délivrées en entrée au modulateur de canal, d'une forme d'onde d'enregistrement qui comprend un motif d'enregistrement CC correspondant à une marque de longueur d'exécution T, et un motif d'effacement comprenant une multi-impulsion correspondant à un espace ; et
**caractérisé en ce que** le motif d'enregistrement CC comprend, en séquence, une première impulsion d'enregistrement avec un premier niveau de puissance, une seconde impulsion d'enregistrement avec un second niveau de puissance, une impulsion CC qui est maintenue à un niveau de puissance prédéterminé et une impulsion de refroidissement,
dans lequel le niveau de puissance de l'impulsion CC est maintenu sur plus de quatre périodes d'horloge lors de l'enregistrement d'une marque ayant sept T,
dans lequel le niveau de puissance de l'impulsion CC est supérieur à celui de la première impulsion d'enregistrement et inférieur à celui de la seconde impulsion d'enregistrement et le niveau de puissance d'impulsion de refroidissement est inférieur à celui de la première impulsion d'enregistrement,
dans lequel les niveaux de puissance des première et dernière impulsions d'effacement du motif d'effacement sont les mêmes qu'un premier niveau de puissance du motif d'enregistrement CC.

2. Procédé selon la revendication 1, dans lequel l'impulsion CC a un niveau de puissance supérieur à celui du motif d'effacement.

3. Procédé selon la revendication 1 ou 2, dans lequel, au cours des étapes (a) à (c), on utilise un codage RLL (2,10).

4. Procédé selon la revendication 1 ou 2, dans lequel, au cours des étapes (a) à (c), on utilise un codage RLL (1,7).

5. Procédé selon l'une quelconque des revendications 1 à 4, dans lequel la multi-impulsion du motif d'effacement est constituée d'impulsions d'un haut niveau de puissance et d'un bas niveau de puissance, commutées sur une demi-période d'horloge des données numériques modulées en canal.

6. Procédé selon la revendication 1, dans lequel les première et seconde impulsions d'enregistrement et l'impulsion de refroidissement sont maintenues sur une demi-période d'horloge, une période d'horloge et une période d'horloge, respectivement, lors de l'enregistrement d'une marque ayant sept périodes d'horloge.

7. Procédé selon la revendication 6, dans lequel l'impulsion de refroidissement se termine sur un bord de données NRZI correspondantes.

8. Appareil pour enregistrer des données sur un support d'enregistrement optique, comprenant :
un générateur de forme d'onde d'enregistrement (2) qui génère une forme d'onde d'enregistrement qui comprend un motif d'enregistrement CC et un motif d'effacement comprenant une multi-impulsion selon les étapes (a) et (b) et le procédé de l'une quelconque des revendications 1 à 7 et
un capteur (1) qui forme une marque ou un espace en appliquant un faisceau sur le support d'enregistrement optique selon la forme d'onde d'enregistrement.

9. Appareil selon la revendication 8, dans lequel le motif d'enregistrement CC a des niveaux de puissance différents qui sont supérieurs à celui du motif d'effacement.

10. Appareil selon la revendication 8 ou 9, comprenant en outre un modulateur de canal (3) qui reçoit des données externes, module le canal des données externes pour produire des données NRZI et délivre les données NRZI au générateur de forme d'onde d'enregistrement.
